# EUROPEAN PATENT SPECIFICATION

(11) **EP 1 902 240 B1**
(45) Date of publication and mention of the grant of the patent: **21.09.2011**
(21) Application number: 06728469.5
(22) Date of filing: 03.03.2006
(51) Int. Cl.: F16K 13/02, F16K 5/04, F16K 1/20, F16K 27/06

(54) **INTERCEPTING VALVE**
UNTERBRECHUNGSVENTIL
VANNE D'INTERCEPTION

(30) Priority: 08.07.2005 IT BS20050085
(43) Date of publication of application: 26.03.2008
(73) Proprietor: Enolgas Bonomi S.p.A., 25062 Concesio (Brescia) (IT)
(72) Inventor: CIPOLLA, Giovanni, I-26100 Cremona (IT)
(74) Representative: Pulieri, Gianluca Antonio
(86) International application number: PCT/IT2006/000132
(87) International publication number: WO 2007/007361

(56) References cited:
- FR-A- 2 719 100
- GB-A- 2 168 127
- US-A- 3 674 235
- US-A- 5 618 027
- US-B1- 6 450 140

## Description

The object of the present invention is a fluid intercepting valve, as disclosed inUS-A-5 618 027, showing all features of the preamble of claim 1.

Generally, an intercepting valve comprises a valve body provided with an inside cavity through which the fluid flows. The valve body houses an intercepting element that closes the cavity for preventing the fluid flow or for choking it.

Intercepting valves are known in the art, wherein the intercepting element switches from the open position to the closed position by performing a rotation. Solutions wherein the intercepting element axially moves between the open position and the closed position are also known.

With the spreading of the automation also in the field of systems, and in particular for the valve control, valves with turnable intercepting element have become greatly widespread, since they can be controlled easily by a rotatable shaft controlled, for example, by an electrical motor.

However, valves with turnable intercepting element also have some disadvantages.

For example, such valves have a wide contact surface between the intercepting element and the sealing gaskets, which causes a high resistance to movements. Moreover, with the use of such valves the surfaces lose part of their lubrication and deposits form.

Such disadvantages impose an oversizing of the motor intended for the valve control.

The object of the present invention is to meet the above needs while solving the disadvantages mentioned above with reference to the prior art. In particular, the object of the present invention is to provide a valve with intercepting element which is limited in its overall dimensions, thereby requiring a low torque for moving said intercepting element in rotation.

Such object is achieved by a valve obtained according to claim 1. The dependent claims describe embodiment variations.

The features and advantages of the valve according to the present invention will appear more clearly from the following description of an embodiment, made by way of a non-limiting example with reference to the annexed drawings, wherein:

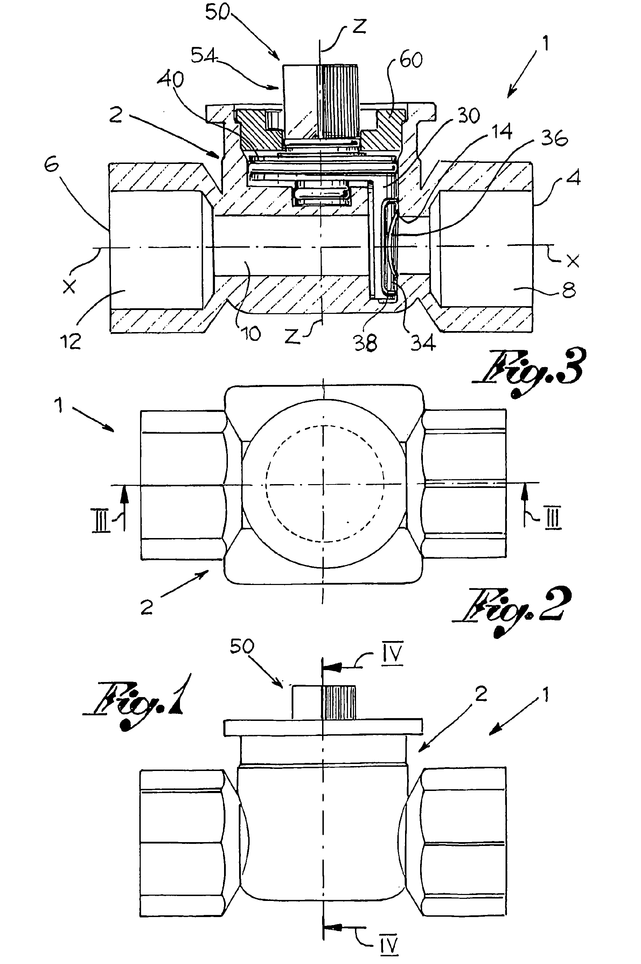

- figure 1 shows a side view of an interception valve according to the present invention, in accordance with an embodiment;

- figure 2 shows a plan view of the valve of figure 1;

- figure 3 shows a partial section view of the valve of figure 1, according to the section line III-III in figure 2;

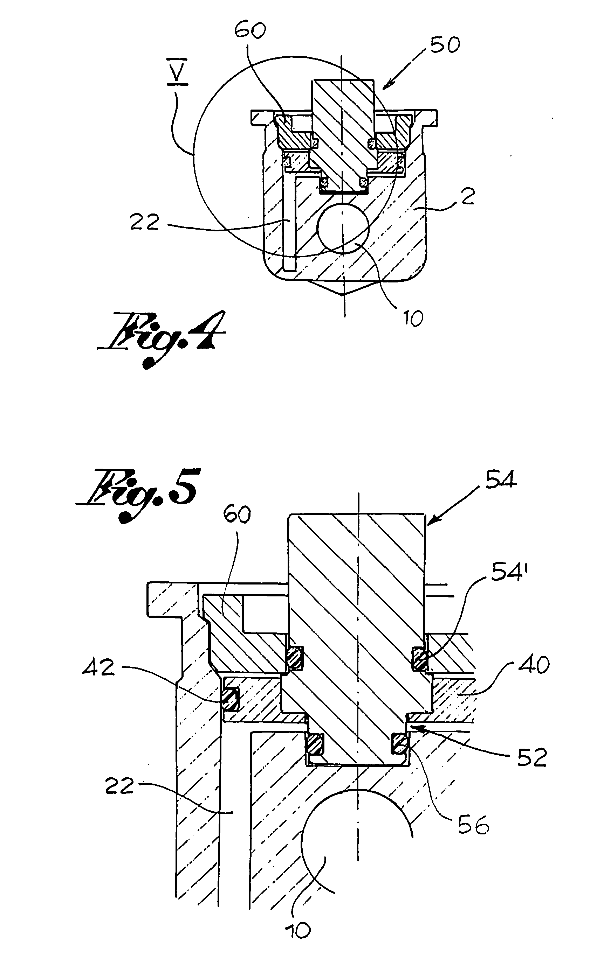

- figure 4 shows a section view of the valve of figure 1., according to the section line IV-IV in figure 1;

- figure 5 shows an enlargement of detail V of figure 4; and

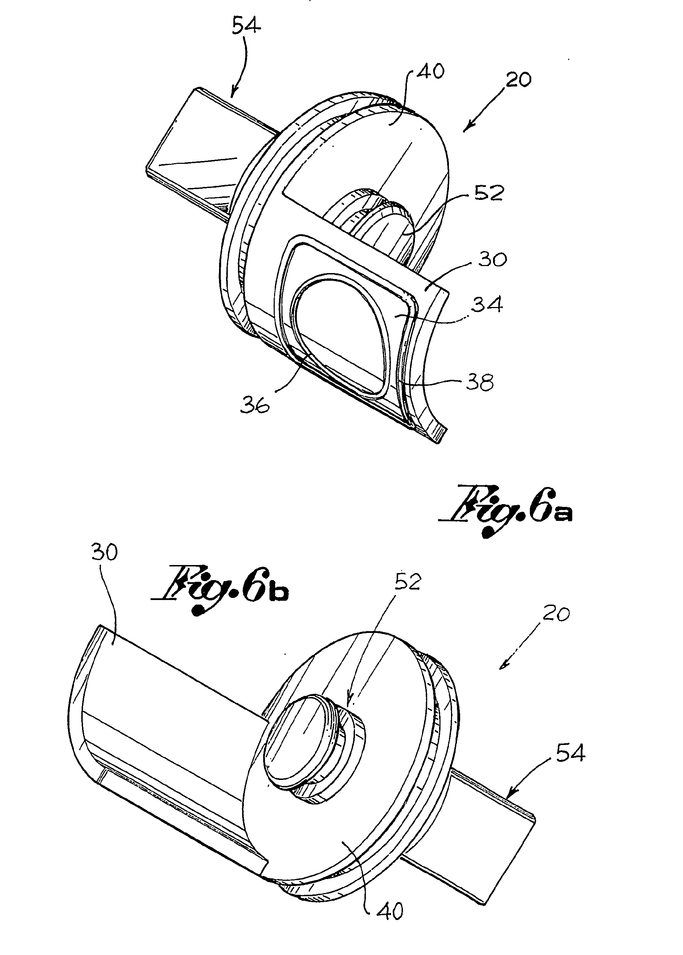

- figures 6a and 6b show perspective views of an intercepting element of the valve of figure 1.

With reference to the annexed figures, reference numeral 1 globally denotes a valve according to the present invention.

The intercepting valve 1 is suitable for being associated to a duct comprising an upstream portion for feeding the fluid towards valve 1 and a downstream portion for feeding the fluid from the valve.

Said valve 1 comprises a valve body 2 having an inside cavity that extends along a longitudinal axis X-X between an inlet section 4 associable to said upstream portion and an outlet section 6 associable to said downstream portion.

Preferably, said inside cavity comprises an upstream space 8, directly in communication with said upstream portion of the duct, an intermediate cylindrical space 10, which develops about said longitudinal axis X-X, and a downstream portion 12, directly in communication with said downstream portion of the duct.

In particular, said upstream space is in communication with said intermediate space 10 by a gap, delimited by an annular edge 14.

Moreover, valve 1 comprises an intercepting element 20 suitable for being rotated about a rotation axis Z-Z for switching from an open position, suitable for allowing the flow of said fluid from said upstream portion to said downstream portion, and a closed position, suitable for preventing such flow.

Moreover, the valve body 2 exhibits a pocket 22 having circumferential extension about said rotation axis Z-Z.

Said longitudinal axis X-X is perpendicular to said rotation axis Z-Z and said pocket 22 extends from said intermediate space 10 of the inside cavity of the valve body 2, along said rotation axis Z-Z.

In accordance with a preferred embodiment, pocket 22 exhibits extension by a circumference arc having angular extension smaller than a round angle, that is, smaller than three hundred sixty hexagesimal degrees.

Preferably, moreover, said pocket exhibits a cylindrical configuration.

Said intercepting element 20 comprises an intercepting wall 30 turnable between said open position and said closed position. Said pocket 22 obtained in the valve body 2 is suitable for seating said intercepting wall 30 in said open position and in said closed position.

In particular, said intercepting wall 30 exhibits cylindrical configuration and extends by a circumference arc about said rotation axis Z-Z.

Preferably, moreover, said pocket 22 has such angular extension as to ensure, following a rotation of the intercepting wall 30 equal to ninety hexagesimal degrees, the closing and opening of the valve itself. Preferably, said angular extension is equal to one hundred eighty hexadecimal degrees.

The intercepting wall 30 exhibits a front surface 32 facing, in said closed position, said upstream portion of the duct, wherein said front surface 32 exhibits a sealing zone 34.

Said sealing zone 34 is at least partly covered with deformable material, for example plastic material, suitable for abutting against said annular edge of the gap for forming a seal.

Preferably, said sealing zone 34 covered with deformable material is obtained by co-moulding.

According to the invention, said sealing zone 34 comprises at least one deformable rib suitable for being compressed, in said closed position, about said annular edge of the gap, to form a seal.

Said sealing zone 34 comprises an inside deformable rib 36 and an outside deformable rib 38. For example, said inside deformable rib 36 is circular, whereas said outside deformable rib 38 is quadrangular, for example lobed, to reduce the circumferential overall dimensions.

According to a preferred embodiment, said intercepting element comprises a plate 40 connected to said intercepting wall, for example disc-shaped.

Said plate 40 circumferentially exhibits an annular groove suitable for seating a first sealing ring 42.

The valve body 2 exhibits a seat suitable for seating said plate 40 of the intercepting element while allowing the placement of said intercepting wall 30 in said pocket 22.

Said first sealing ring 42 allows forming a seal between said plate 40 of the intercepting element and said seat.

According to a preferred embodiment, the intercepting element comprises a control pin 50 mechanically connected to said plate 40.

For example, said control pin 50 is mechanically connectable to said plate 40 through a shape coupling. According to a further example, said control pin 50 is connected to said plate 40 being manufactured in a single piece with said plate, for example by moulding.

The control pin 50 crosses said plate 40 and comprises a bottom portion 52, protruding at the bottom from said plate 40, and a top portion 54, protruding from the top of said plate.

Said top portion 54 is suitable for being associated to valve control means, for example an electrical motor.

Preferably, said top portion 54 exhibits a circumferential groove suitable for seating a further sealing ring 54'.

Said bottom portion 52 exhibits an annular groove suitable for seating a second sealing ring 56.

Said valve body 2 exhibits a seating space which extends from said seat, suitable for seating said bottom portion 52 of the control pin 50.

Said second sealing ring 56 forms a seal between said seating space and said bottom portion 52 of pin 50.

According to a preferred embodiment, said valve 1 comprises holding means suitable for holding said intercepting element associated to said valve body 2.

Preferably, said holding means comprise a ring nut 60, for example threaded.

The valve body 2 further comprises a ring nut seat suitable for seating said ring nut, for keeping said plate of the intercepting element in said seat.

Said further sealing ring 54' forms a seal between said top portion 52 of the control pin 50 and said ring nut 60.

In a closed configuration, said intercepting element 20 is in a closed position, wherein said intercepting wall 30 blocks said gap.

In particular, in said closed position, the deformable coating of the sealing zone is deformed and forms a seal against fluid leaking. Further seals are formed by the inside rib and by the outside rib of said sealing zone.

In an open configuration of the valve, said intercepting element is in an open position, wherein said intercepting wall does not block or only partly blocks the gap, thus allowing the fluid flow from the upstream portion of the duct towards the downstream portion.

For the switching from the open position to the closed position and vice versa, the valve according to the present invention requires a low control torque, for example acting through said top portion of the control pin, thanks to the little extended surfaces the intercepting element contacts.

Unusually, the valve according to the present invention allows using easy to manufacture control systems since the intercepting element is turnable and at the same time, requires a low control torque.

Advantageously, moreover, the configuration of the sealing zone allows reducing the circumferential overall dimensions of the intercepting wall, thus reducing the required control torque.

According to an even further advantageous aspect, the valve exhibits a high level of safety that excludes the possibility of a projection of the intercepting element following a high pressure.

Finally, the valve according to the present invention is easy to manufacture and simple to assemble.

It is clear that a man skilled in the art can make several changes and adjustments to the valve described above in order to meet specific and incidental needs, all falling within the scope of protection defined in the following claims.

## Claims

1. A fluid intercepting valve (1) suitable for being associated to a duct, wherein said duct comprises an upstream portion for feeding the fluid towards the valve and a downstream portion for feeding the fluid from the valve, wherein said valve comprises
- a valve body (2) having an inside cavity that extends along a longitudinal axis (X-X) between an inlet section (4) associable to said upstream portion and an outlet section (6) associable to said downstream portion;
- an intercepting element (20) suitable for being rotated about a rotation axis (Z-Z), wherein said intercepting element comprises an intercepting wall (30) turnable between an open position, suitable for allowing the flow of said fluid from said upstream portion to said downstream portion, and a closed position, suitable for preventing such flow;
wherein said valve body further has a pocket (22) having circumferential extension about said rotation axis (Z-Z), said pocket being suitable for seating said intercepting wall (30) in said open position and in said closed position,
and wherein said intercepting wall (30) has a front surface (32) facing, in said closed position, towards said upstream portion of the duct, wherein said front surface (32) has a sealing zone (34),
and wherein said sealing zone comprises at least one deformable rib suitable for being compressed, in said closed position, about an angular edge (14) delimiting the gap between said upstream portion and said pocket (22), to form a seal;
wherein said sealing zone comprises an inside deformable rib (34) and an outside deformable rib (36)
said valve being **characterized in that**
said outside deformable rib is quadrangular, to reduce the circumferential overall dimensions, and **in that** the front surface is convex, in said closed position, towards said upstream portion of said duct.

2. A valve according to claim 1, wherein said cavity comprises an upstream space (8), directly in communication with said upstream portion of the duct, in said open position, said upstream space being in communication with said pocket (22) through the gap delimited by the annular edge (14)

3. A valve according to claim 1 or 2, wherein said pocket has extension by a circumference arc.

4. A valve according to any one of the previous claims, wherein said pocket is cylindrical.

5. A valve according to any one of the previous claims, wherein said inside cavity comprises an intermediate cylindrical space (10), wherein said intermediate space develops about said longitudinal axis (X-X) and said pocket (22) has cylindrical configuration and extends about said rotation axis (Z-Z), said longitudinal axis (X-X) being perpendicular to said rotation axis (Z-Z), said pocket extending from said intermediate space of the inside cavity along said rotation axis (Z-Z).

6. A valve according to any one of the previous claims, wherein said intercepting wall (30) has cylindrical configuration and extends by a circumference arc about said rotation axis (Z-Z).

7. A valve according to any one of the preceding claims, wherein said sealing zone is at least partly covered with deformable material.

8. A valve according to claim 7, wherein said sealing zone covered with deformable material is obtained by co-moulding.

9. A valve according to any one of the preceding claims, wherein said inside deformable rib is circular.

10. A valve according to any one of the previous claims, wherein said outside deformable rib is lobed at the corners.

11. A valve according to any one of the previous claims, wherein said valve body further has a seal and wherein said intercepting element (30) comprises a plate (40), said plate being connected to said intercepting wall, said seat being suitable for seating said plate.

12. A valve according to claim 11, wherein said plate circumferentially has an annular groove and wherein said intercepting element comprises a first sealing ring (42), said sealing ring being seated in said annular groove of the plate (40) for forming a seal between the plate and said seat.

13. according to claim 11 or 12, wherein said valve body further has a seating space and wherein said intercepting element comprises a control pin (50), said control pin being mechanically connected to said plate (40).

14. A valve according to claim 13, wherein said pin is mechanically connectable to said plate through a shape coupling.

15. A valve according to claim 13, wherein said pin is mechanically connected to said plate, being manufactured in a single piece with said plate.

16. A valve according to claim 15, therein said control pin and said plate are manufactured together by moulding.

17. A valve according to any one of claims 13 to 16, wherein said control pin (50) crosses said plate (40), determining a top portion (52) and a bottom portion (54), said bottom portion (52) being seated in said seating space.

18. A valve according to claim 17, wherein said bottom portion (52) has an annular seat and wherein said intercepting element comprises a second sealing ring (56), said second sealing ring being seated in said annular seat for forming a seal between said bottom portion (54) of the stem and said seating space.

19. A valve according to any one of the previous claims, comprising a ring nut (60) and wherein said valve body (2) has a ring nut seat, said ring nut seat being suitable for seating said ring nut (60), said ring nut, in an assembly configuration wherein it is seated in said ring nut seat, being suitable for keeping said intercepting element (30) associated to said valve body

20. A valve according to claim 19, wherein said ring nut is screwable to said valve body.

## Patentansprüche

1. Fluidunterbrechungsventil (1), das geeignet ist, um mit einem Kanal verbunden zu werden, wobei der Kanal einen stromaufwärtigen Abschnitt zum Zuführen des Fluids in Richtung des Ventils und einen stromabwärtigen Abschnitt zum Transportieren des Fluids von dem Ventil umfasst, wobei das Ventil umfasst:
- einen Ventilkörper (2) mit einem inneren Hohlraum, der sich entlang einer Längsachse (X-X) zwischen einem Einlassabschnitt (4), der mit dem stromaufwärtigen Abschnitt verbindbar ist, und einem Auslassabschnitt (6), der mit dem stromabwärtigen Abschnitt verbindbar ist, erstreckt;
- ein Unterbrechungselement (20), das geeignet ist, um eine Drehachse (Z-Z) gedreht zu werden, wobei das Unterbrechungselement eine Unterbrechungswand (30) umfasst, die zwischen einer offenen Position, die geeignet ist, um die Strömung des Fluids von dem stromaufwärtigen Abschnitt zu dem stromabwärtigen Abschnitt zuzulassen, und einer geschlossenen Position, die geeignet ist, eine derartige Strömung zu verhindern, drehbar ist;
wobei der Ventilkörper ferner eine Tasche (22) mit einer Umfangsausdehnung um die Drehachse (Z-Z) hat, wobei die Tasche geeignet ist, um die Unterbrechungswand (30) in der offenen Position und in der geschlossenen Position zu lagern,
und wobei die Unterbrechungswand (30) eine Vorderfläche (32) hat, die in der geschlossenen Position in Richtung des stromaufwärtigen Abschnitts des Kanals gewandt ist, wobei die Vorderfläche (32) eine Abdichtungszone (34) hat,
und wobei die Abdichtungszone wenigstens eine verformbare Rippe umfasst, die geeignet ist, in der geschlossenen Position um einen ringförmigen Rand (14), der die Lücke zwischen dem stromaufwärtigen Abschnitt und der Tasche (22) begrenzt, komprimiert zu werden, um eine Dichtung zu bilden;
wobei die Dichtungszone eine innere verformbare Rippe (34) und eine äußere verformbare Rippe (36) umfasst, wobei das Ventil **dadurch gekennzeichnet ist, dass** die äußere verformbare Rippe viereckig ist, um die gesamte Umfangsabmessung zu verringern, und dass die Vorderfläche in der geschlossenen Position in Richtung des stromaufwärtigen Abschnitts des Kanals konvex ist.

2. Ventil nach Anspruch 1, wobei der Hohlraum einen stromaufwärtigen Raum (8) in direkter Verbindung mit dem stromaufwärtigen Abschnitt des Kanals in der offenen Position umfasst, wobei der stromaufwärtige Raum durch die Lücke, die von dem ringförmigen Rand (14) begrenzt ist, in Verbindung mit der Tasche (22) steht.

3. Ventil nach Anspruch 1 oder 2, wobei die Tasche eine Ausdehnung in einem Umfangsbogen hat.

4. Ventil nach einem der vorhergehenden Ansprüche, wobei die Tasche zylindrisch ist.

5. Ventil nach einem der vorhergehenden Ansprüche, wobei der innere Hohlraum einen zylindrischen Zwischenraum (10) umfasst, wobei der Zwischenraum sich um die Längsachse (X-X) entwickelt, und die Tasche (22) einen zylindrischen Aufbau hat und sich um die Drehachse (Z-Z) erstreckt, wobei die Längsachse (X-X) senkrecht zu der Drehachse (Z-Z) ist, wobei die Tasche sich von dem Zwischenraum des inneren Hohlraums entlang der Drehachse (Z-Z) erstreckt.

6. Ventil nach einem der vorhergehenden Ansprüche, wobei die Unterbrechungswand (30) einen zylindrischen Aufbau hat und sich in einem Umfangsbogen um die Drehachse (Z-Z) erstreckt.

7. Ventil nach einem der vorhergehenden Ansprüche, wobei die Dichtungszone wenigstens teilweise mit verformbarem Material bedeckt ist.

8. Ventil nach Anspruch 7, wobei die Dichtungszone, die mit verformbarem Material bedeckt ist durch gleichzeitiges Formen erhalten wird.

9. Ventil nach einem der vorhergehenden Ansprüche, wobei die innere verformbare Rippe kreisförmig ist.

10. Ventil nach einem der vorhergehenden Ansprüche, wobei die äußere verformbare Rippe an den Ecken gelappt ist.

11. Ventil nach einem der vorhergehenden Ansprüche, wobei der Ventilkörper ferner einen Sitz hat und wobei das Unterbrechungselement (30) eine Platte (40) umfasst, wobei die Platte mit der Unterbrechungswand verbunden ist, wobei der Sitz geeignet ist, um die Platte zu lagern.

12. Ventil nach Anspruch 11, wobei die Platte dem Umfang nach eine ringförmige Nut hat und wobei das Unterbrechungselement einen ersten Dichtungsring (42) umfasst, wobei der Dichtungsring in der ringförmigen Nut der Platte (40) sitzt, um eine Dichtung zwischen der Platte und dem Sitz zu bilden.

13. Ventil nach Anspruch 11 oder 12, wobei der Ventilkörper ferner einen Sitzraum hat und wobei das Unterbrechungselement einen Steuerstift (50) umfasst, wobei der Steuerstift mechanisch mit der Platte (40) gekoppelt ist.

14. Ventil nach Anspruch 13, wobei der Stift durch eine Formkopplung mechanisch mit der Platte verbindbar ist.

15. Ventil nach Anspruch 13, wobei der Stift mechanisch mit der Platte verbunden ist, wobei er in einem einzigen Stück mit der Platte gefertigt ist.

16. Ventil nach Anspruch 15, wobei der Steuerstift und die Platte durch Formen zusammen hergestellt sind.

17. Ventil nach einem der Ansprüche 13 bis 16, wobei der Steuerstift (50) die Platte (40) kreuzt, einen oberen Abschnitt (52) und einen unteren Abschnitt (54) bestimmt, wobei der untere Abschnitt (52) in dem Sitzraum sitzt.

18. Ventil nach Anspruch 17, wobei der untere Abschnitt (52) einen ringförmigen Sitz hat und wobei das Unterbrechungselement einen zweiten Dichtungsring (56) umfasst, wobei der zweite Dichtungsring in dem ringförmigen Sitz sitzt, um eine Dichtung zwischen dem unteren Abschnitt (54) des Schafts und dem Sitzraum zu bilden.

19. Ventil nach einem der vorhergehenden Ansprüche, das eine Ringmutter (60) umfasst, und wobei der Ventilkörper (2) einen Ringmuttersitz hat, wobei der Ringmuttersitz geeignet ist, um die Ringmutter (60) zu lagern, wobei die Ringmutter in einem Montageaufbau, in dem sie in dem Ringmuttersitz sitzt, geeignet ist, das Unterbrechungselement (30) mit dem Ventilkörper (2) verbunden zu halten.

20. Ventil nach Anspruch 19, wobei die Ringmutter an den Ventilkörper schraubbar ist.

## Revendications

1. Vanne (1) d'interception de fluide appropriée pour être associée à un conduit, dans laquelle ledit conduit comprend une partie amont destinée à acheminer le fluide vers la vanne et une partie aval destinée à acheminer le fluide depuis la vanne, ladite vanne comprenant
- un corps (2) de vanne comportant une cavité intérieure qui s'étend le long d'un axe longitudinal (X-X) entre une section d'entrée (4) pouvant être associée à ladite partie amont et une section de sortie (6) pouvant être associée à ladite partie aval ;
- un élément d'interception (20) approprié pour tourner autour d'un axe de rotation (Z-Z), ledit élément d'interception comprenant une paroi d'interception (30) pouvant tourner entre une position ouverte, appropriée pour permettre l'écoulement dudit fluide de ladite partie amont vers ladite partie aval, et une position fermée, appropriée pour empêcher un tel écoulement ;
dans laquelle ledit corps de vanne comporte en outre une poche (22) présentant une extension circonférentielle autour dudit axe de rotation (Z-Z), ladite poche étant appropriée pour loger ladite paroi d'interception (30) dans ladite position ouverte et dans ladite position fermée,
et dans laquelle ladite paroi d'interception (30) comporte une surface avant (32) tournée, dans ladite position fermée, vers ladite partie amont du conduit, ladite surface avant (32) comportant une zone d'étanchéité (34),
et dans laquelle ladite zone d'étanchéité com-prend au moins une nervure déformable appropriée pour être comprimée, dans ladite position fermée, autour d'un bord annulaire (14) délimitant l'interstice entre ladite partie amont et ladite poche (22), pour former un joint ; dans laquelle ladite zone d'étanchéité comprend une nervure déformable intérieure (34) et une nervure déformable extérieure (36),
ladite vanne étant **caractérisée en ce que** ladite nervure déformable extérieure est quadrangulaire afin de réduire les dimensions circonférentielles globales, et **en ce que** la surface avant est convexe, dans ladite position fermée, vers ladite partie amont dudit conduit.

2. Vanne selon la revendication 1, dans laquelle ladite cavité comprend un espace amont (8), en communication directe avec ladite partie amont du conduit, dans ladite position ouverte, ledit espace amont étant en communication avec ladite poche (22) par l'intermédiaire de l'interstice délimité par le bord annulaire (14).

3. Vanne selon la revendication 1 ou 2, dans laquelle ladite poche comporte une extension par un arc de circonférence.

4. Vanne selon l'une quelconque des revendications précédentes, dans laquelle ladite poche est cylindrique.

5. Vanne selon l'une quelconque des revendications précédentes, dans laquelle ladite cavité intérieure comprend un espace cylindrique inter-médiaire (10), dans laquelle ledit espace intermédiaire se développe autour dudit axe longitudinal (X-X) et ladite poche (22) présente une configuration cylindrique et s'étend autour dudit axe de rotation (Z-Z), ledit axe longitu-dinal (X-X) étant perpendiculaire audit axe de rotation (Z-Z), ladite poche s'étendant depuis ledit espace intermédiaire de la cavité inté-rieure le long dudit axe de rotation (Z-Z).

6. Vanne selon l'une quelconque des revendications précédentes, dans laquelle ladite paroi d'interception (30) présente une configuration cylindrique et s'étend par un arc de circon-férence autour dudit axe de rotation (2-2).

7. Vanne selon l'une quelconque des revendications précédentes, dans laquelle ladite zone d'étanchéité est au moins partiellement recou-verte d'un matériau déformable.

8. Vanne selon la revendication 7, dans laquelle ladite zone d'étanchéité recouverte d'un matériau déformable est obtenue par co-moulage.

9. Vanne selon l'une quelconque des revendications précédentes, dans laquelle ladite nervure déformable intérieure est circulaire.

10. Vanne selon l'une quelconque des revendications précédentes, dans laquelle ladite nervure déformable extérieure est lobée aux coins.

11. Vanne selon l'une quelconque des revendications précédentes, dans laquelle ledit corps de vanne comporte en outre un logement et dans laquelle ledit élément d'interception (30) com-prend une plaque (40), ladite plaque étant reliée à ladite paroi d'interception, ledit logement étant approprié pour loger ladite plaque.

12. Vanne selon la revendication 11, dans laquelle ladite plaque comporte circonférentiel-lement une rainure annulaire et dans laquelle ledit élément d'interception comprend une première bague d'étanchéité (42), ladite bague d'étanchéité étant logée dans ladite rainure annulaire de la plaque (40) pour former un joint entre la plaque et ledit logement.

13. Vanne selon la revendication 11 ou 12, dans laquelle ledit corps de vanne comporte en outre un espace de logement et dans laquelle ledit élément d'interception comprend une tige de commande (50), ladite tige de commande étant mécaniquement reliée à ladite plaque (40).

14. Vanne selon la revendication 13, dans laquelle ladite tige peut être mécaniquement reliée à ladite plaque par le biais d'un accouplement de forme.

15. Vanne selon la revendication 13, dans laquelle ladite tige est mécaniquement reliée à ladite plaque, fabriquée d'un seul bloc avec ladite plaque.

16. Vanne selon la revendication 15, dans laquelle ladite tige de commande et ladite plaque sont fabriquées ensemble par moulage.

17. Vanne selon l'une quelconque des revendications 13 à 16, dans laquelle ladite tige de commande (50) croise ladite plaque (40), déter-minant une partie supérieure (52) et une partie inférieure (54), ladite partie inférieure (52) étant logée dans ledit espace de logement.

18. Vanne selon la revendication 17, dans laquelle ladite partie inférieure (52) comporte un logement annulaire et dans laquelle ledit élément d'interception comprend une seconde bague d'étan-chéité (56), ladite seconde bague d'étanchéité étant logée dans ledit logement annulaire pour former un joint entre ladite partie inférieure (54) de la tige et ledit espace de logement.

19. Vanne selon l'une quelconque des revendications précédentes, comprenant un écrou de blocage (60) et dans laquelle ledit corps (2) de vanne comporte un logement pour écrou de blocage, ledit logement pour écrou de blocage étant approprié pour loger ledit écrou de blocage (60), ledit écrou de blocage, dans une configuration d'assem-blage, dans laquelle il est logé dans ledit logement pour écrou de blocage, étant approprié pour maintenir ledit élément d'interception (30) associé audit corps (2) de vanne.

20. Vanne selon la revendication 19, dans laquelle ledit écrou de blocage peut être vissé audit corps de vanne.
